# EUROPEAN PATENT SPECIFICATION

(11) **EP 1 922 698 B1**
(45) Date of publication and mention of the grant of the patent: **21.01.2009**
(21) Application number: 06795738.1
(22) Date of filing: 23.08.2006
(51) Int. Cl.: G06T 15/00, G06T 11/00

(54) **A METHOD OF GENERATING A 2-D IMAGE OF A 3-D OBJECT**
VERFAHREN ZUR ERZEUGUNG EINES 2-D-BILDES EINES 3-D-OBJEKTS
PROCEDE DE CREATION D'UNE IMAGE EN 2D D'UN OBJET EN 3D

(30) Priority: 26.08.2005 EP 05300698
(43) Date of publication of application: 21.05.2008
(73) Proprietor: Philips Intellectual Property & Standards GmbH, 20099 Hamburg (DE); Koninklijke Philips Electronics N.V., 5621 BA Eindhoven (NL)
(72) Inventor: KIEFER, Gundolf, F-75008 Paris (FR); WEESE, Juergen, F-75008 Paris (FR)
(74) Representative: Schouten, Marcus Maria
(86) International application number: PCT/IB2006/052911
(87) International publication number: WO 2007/023459

(56) References cited:
- US-A- 6 083 162
- US-B1- 6 366 800
- KIEFER G ET AL: "Visualization of large medical data sets using memory-optimized CPU and GPU algorithms" PROCEEDINGS OF THE SPIE - THE INTERNATIONAL SOCIETY FOR OPTICAL ENGINEERING SPIE-INT. SOC. OPT. ENG USA, vol. 5744, no. 1, 15 February 2005 (2005-02-15), pages 677-687, XP002416755 ISSN: 0277-786X
- NELSON MAX: "OPTICAL MODELS FOR DIRECT VOLUME RENDERING" IEEE TRANSACTIONS ON VISUALIZATION AND COMPUTER GRAPHICS, IEEE SERVICE CENTER, LOS ALAMITOS, CA, US, vol. 1, no. 2, 1 June 1995 (1995-06-01), pages 99-108, XP000531028 ISSN: 1077-2626 cited in the application

## Description

The present invention relates generally to a method for generating a 2-D image of a 3-D object using a modified direct volume rendering technique.

Visualization of the structure of 3-D objects on a 2-D image is an important topic in the field of computer graphics and finds application in many industries for example the medical industry. A CT scanner produces thousands of parallel 2-D image slices of a patient's body, each slice including a 2-D array of data values, each value representing an attribute of the body at a given location, for example, density. All the slices are stacked together to form an image volume or a volumetric dataset of the patient's body. The display on the monitor of a medical workstation of interactive 2-D images showing 3-D characteristics of a body provides a powerful diagnosis tool.

Two important rendering methods for visualizing 3D data sets are Direct Volume Rendering (DVR) and Iso-Surface Rendering (ISR). In state-of-the-art medical workstations, two distinct algorithms for both methods are implemented, which differ considerably.

In DVR, the scalar attribute or voxel at any point within the image volume is associated with a plurality of optical properties, such as colour or opacity, defined by a user specified transfer function and stored as a grey scale. The 2-D image plane consists of a regularly spaced grid of picture elements or pixels, each pixel having red, green, and blue colour components. A plurality of notional rays are cast through the volume and they are attenuated or reflected by the volume. The amount of attenuated or reflected ray energy of each ray is indicative of the 3-D characteristics of objects embedded within the image volume, and determines a pixel value on the 2-D image plane in accordance with the opacity and colour mapping of the volume along the corresponding ray path.

The volume data is typically sampled at equidistant locations along each ray path. The pixel values associated with the plurality of ray origins on the 2-D image plane form an image that can be rendered on a computer monitor. In principle, every sample point along a ray path may contribute to the final pixel colour, and the sample points are usually processed in the order they are located along the ray.

In iso-surface rendering, the surface defined by a given threshold value is determined and visualized. Iso-surface algorithms based on ray casting perform an efficient search for the surface and determine the exact surface point inside a voxel at a high accuracy. This can be done, for example, by a binary search or by using Newton iteration as explained in detail in "M. K. Bosma: "Iso-Surface Volume Rendering: Speed and Accuracy for Medical Application, Ph.D. thesis Twente University, PrintPartners Ipskamp, Enschede, 2000". When using binary search, n computational steps are sufficient to locate the surface along the viewing ray at an accuracy of 2^{-*n*} voxels. Such an iterative approach is possible as only one point along each viewing ray contributes to the output image, and only this point has to be determined. The order in which the sampled points are visited are not necessarily in the order they are located along the ray.

Theoretically, DVR algorithms may also be used to display iso-surfaces by selecting an appropriate classification function assigning an opacity of 0 or 1 to grey values below or above the threshold, respectively. However, compared to iterative iso-surface rendering this leads to a visible loss in image quality. DVR is useful to display data sets where more than a single iso-surface is relevant, for example, to display multiple iso-surfaces, noisy data in a smooth way or regions that cannot be visualized by an iso-surface at all. However, achieving the same image quality as obtained by iso-surface rendering would require decreasing the step distance to 2^{-*n*}, where n may be 10, which is computationally infeasible.

Both US 6 366 800 B1 and US 6 083 162 A disclose techniques for determining isosurfaces from sets of 3D volume data and render them by a wireframe model.

US 6 366 800 B 1 further sets out that the volume data is segmented by means of an adaptive intensity threshold, thus determining a growing region representing e.g. an airway in the human body.

US 6 083 162 A discloses that the volume data can be segmented either by thresholding or by region growing from a seed voxel.

The publication "Visualization of large medical data sets using memory-optimized CPU and GPU algorithms", G. Kiefer et al., Proceedings of the SPIE - the International Society for Optical Engineering SPIE-INT. SOC. OPT. ENG USA, vol. 5744, no. 1, 15 February 2005 (2005-02-15), pages 677-687, XP002416755 ISSN: 0277-786X describes memory optimized algorithms for visualising medical volume data and mentions that voxels can either be sampled at equidistant locations along a ray or at non-equidistant locations, i.e. at the voxel cell boundaries.

Embodiments of the present invention aim to alleviate the above - mentioned problems.

Embodiments of the present invention aim to combine the advantages of iso-surface rendering (high image quality) with the flexibility of direct volume rendering. On the one hand, the embodiments of the present invention aim to allow efficient generation high-quality iso-surface images. On the other hand, the full flexibility of direct volume rendering is maintained, and in the same image semi-transparent and differently coloured objects can be displayed.

In consequence, only one visualization tool is required in a medical workstation. This may improve both the maintainability of the software and the usability of the workstation: The user interface can be simplified such that the user does not have to choose between different rendering modes, or - if the mode switch is done automatically - he does not observe potentially distracting changes in the image appearance.

According to the present invention there is provided a method for generating a 2-D image of a 3-D object represented by a volume data set comprising a multiplicity of data points each having an object parameter value, the method comprising: casting a plurality of notional rays through the 3-D object and for each ray, dividing a ray path into a plurality of base sampling intervals defined by data points on the path and if it is determined that a difference in parameter values across a base sampling interval is greater than a pre-determined value, generating within the base sampling interval smaller sampling intervals between data points until it is determined that a difference in parameter values across each generated smaller sampling interval in the base interval is less than the pre-determined threshold and wherein values indicative of an interaction between the ray and the 3-D object in the sampling intervals along the path are accumulated to determine a pixel value in the 2-D image.

An embodiment of the invention will now be described by way of example only with reference to the accompanying drawing in which:
Figure 1 is a schematic diagram of a system embodying the present invention,
Figure 2A illustrates a ray diagram,
Figure 2B illustrates a ray diagram exemplifying an embodiment of the invention;
Figure 3 illustrates a further ray diagram exemplifying an embodiment of the invention;
Figure 4 illustrates a yet further ray diagram exemplifying an embodiment of the invention;
Figures 5A, 5B, 5C illustrate 3D images displayed on a 2D plane;
Figures 6A, 6B illustrate 3D images displayed on a 2D plane.

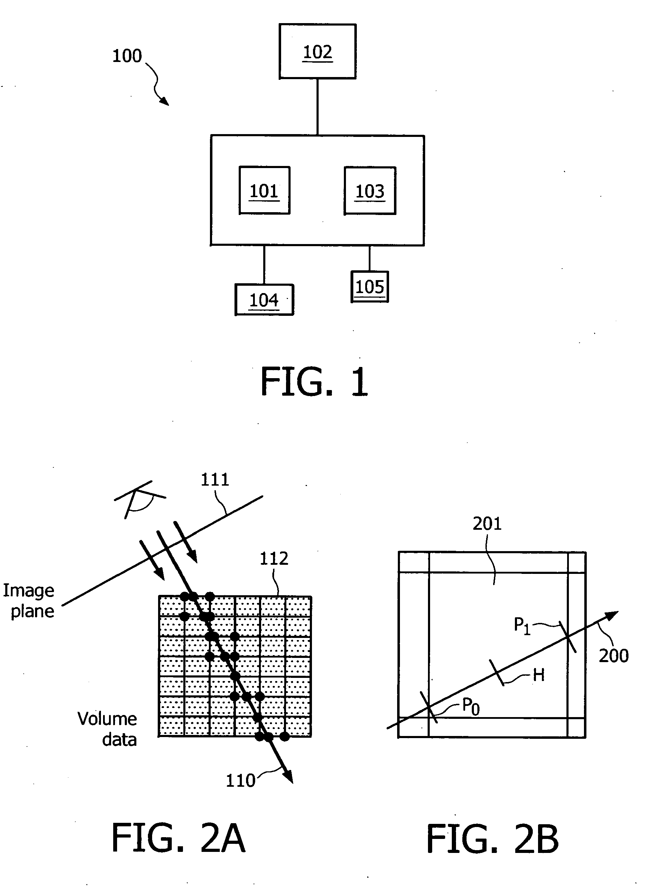

Referring first to Figure 1, data acquisition for an embodiment of the present invention, may be achieved using a CT medical scanner (not shown), comprising means for acquiring 3D volume digital data representative of a body or part of a body. Associated with the medical scanner is as illustrated in Figure 1, a digital processing system 100 for processing the acquired 3D volume data. The system 100 may be a medical workstation having as data input the 3 D volume data obtained by the CT scanner. The system comprises a processing arrangement 101 for processing the 3 D volume data in accordance with embodiments of the present invention, a display 102 for displaying images and a store 103 for storing data. The workstation 100 may also comprise a keyboard 104 and a mouse 105 as user input means.

The processing arrangement 101 may be a suitably programmed processor of the workstation 100, or a special purpose processor having circuit means such as filters, logic operators and memories, that are arranged to perform the functions of the method steps according to the invention. The system 100 may use a computer program product having program instructions to be executed by the processing arrangement 101 in order to carry out the method steps. The data processing system, display and/or storage means may be located remotely from the data acquisition means of the system.

Figure 2A illustrates the basic principle of direct volume rendering in an embodiment of the present invention. A plurality of notional rays, of which one ray 110 is illustrated are cast from an image plane 111 through an image volume 112 representing part of a 3D object, for example, a body.

Different rays correspond to different pixels on a 2-D image screen, for example, the display 102 of the workstation 100. Each pixel value is determined by the interaction between at least one ray and the image volume 112.

To calculate an individual pixel value for each sample point along a ray, the following steps are performed:
a) A sample grey value is taken from the volume data.
b) Depending on the sample grey value, optical parameters (e. g. attenuation, color) are determined for that sample. The transfer function (sometimes also called classification) is the function that maps grey values to optical values.
c) Depending on these optical values, the color of the pixel is updated using a "ShadeAndAccumulate" procedure as is known in the art. This happens in two steps: First, an effective color for the current sample is determined. The color returned by the transfer function can be seen as a material color. This color is modified according to a light model, typically a Phong-Blinn model, depending on the lighting and the surface normal at the sample point. Secondly, the visibility of the sample according to the attenuation of the ray accumulated so far is determined and the shaded sample color is added to the final pixel color with that weight.

Details and further information on light models for volume rendering can be found in, Max Nelson: "Optical Models for Direct Volume Rendering", IEEE Transactions on Visualization and Computer Graphics", 1995, pp. 99-108

Figure 2B illustrates a single voxel cell 201 in an image volume, and the points P₀ and P₁ along the ray 200 define a base interval which is the standard distance between two successive sampling points along the ray's path. In normal DVR, each sampling point is separated from the previous sampling point by this constant base interval, such that the sampling points are equidistant along the ray's path.

The direct volume rendering method of the present invention applies the following recursive procedure to each base interval along a ray's path.

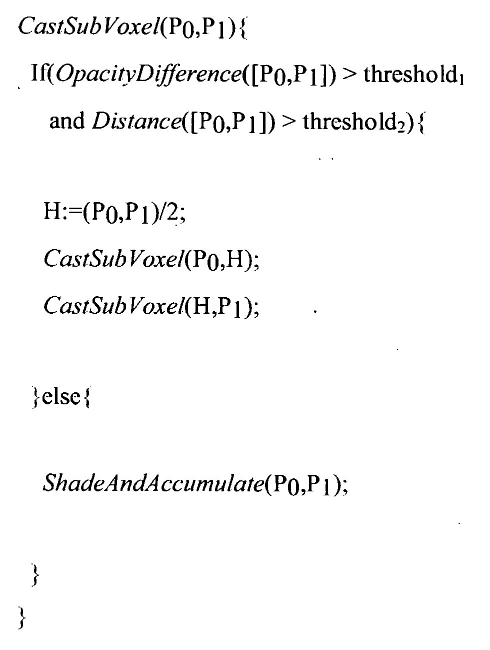

The procedure estimates for each base interval, whether or not the difference between any two values of the relevant property of the volume data set, for example its opacity, between the two sample points can exceed a pre-determined threshold.

If, according to estimation, the difference in opacity values does not exceed the threshold, the base interval is processed as per normal by a 'ShadeAndAccumulate' procedure that determines the color contribution of the ray interval [P₀,P₁] and adds it to the current pixel color as per a standard DVR algorithm.

If, according to estimation, the difference in opacity values does exceed the threshold, the base interval is divided into two smaller new intervals [P₀,H] and [H,P₁], both preferably of equal size, and both new intervals are recursively processed by the same procedure using the same criteria. That is to say, each new interval is divided into smaller intervals until it is determined that the difference in opacity values across an interval does not exceed the pre-determined threshold or the geometrical extent of an interval is fallen below another threshold value. Once this has been determined for an interval, the 'ShadeAndAccumulate' procedure is applied to the interval.

The estimation function 'OpacityDifference' for the expected opacity difference can, for example, be implemented by evaluating the classification function at the two points defining an interval, P₀ and P₁, if the interval is a base interval. More generally, the maximum change can be determined along the opacity function for the complete interval defined by the two grey values sampled at the two points defining an interval, again P₀ and P₁ if the interval is a base interval. It should be noted that the estimation function may also depend on other classification parameters than the opacity, e. g. the color or other optical parameters that may also change quickly along the ray.

The requirement that a recursion can only happen if the distance between sample points is greater than a pre-determine threshold prevents an endless recursion loop.

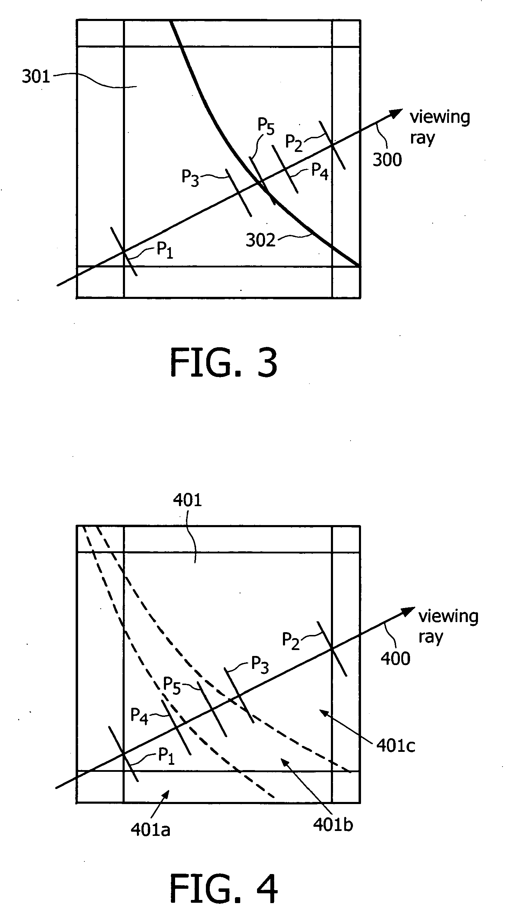

A further example is described with respect to Figure 3, where a notional ray ray 300 is illustrated cast through a voxel cell 301. A classification function defines a step function defining an iso-surface, the following steps are performed by the procedure.

The opacity in a first point (P₁) is low whilst that at a second point (P₂) is high. Hence, the difference in opacity values at the first point (P₁) and the second point (P₂) exceeds the threshold value, and so the interval defined by first point (P₁) and the second point (P₂) is divided into two new intervals defined respectively by the first point (P₁) and a third point P₃ and by the third point P₃ and the second point P₂.

The new interval defined by the first point P₁ and the third point P₃ has a constant opacity of 0. Hence, no further division into new intervals is necessary, and this interval is processed in a single 'ShadeAndAccumulate' step. Preferably, a properly implemented algorithm detects that this interval is fully transparent, so that no expensive shading operation is performed here.

The difference in opacity values at the third point (P₃) and the second point (P₂) still exceeds the threshold value, and so the new interval defined by these two points is divided into two new intervals defined respectively by the third point (P₃) and a fourth point P₄ and by the fourth point P₄ and the second point P₂.

The new interval defined by the fourth point P₄ and the second point P₂ has a constant opacity of 1. Hence, no further division into new intervals is necessary.

The difference in opacity values at the third point (P₃) and the fourth point (P₄) still exceeds the threshold value, and so the new interval defined by these two points, is divided into two new intervals defined respectively by the third point (P₃) and a fifth point P₅ and by the fifth point P₅ and the fourth point P₄.

The new interval defined by the fifth point P₅ and the fourth point P₄ has a constant opacity of 1 and no further subdivision is necessary.

The difference in opacity values at the third point (P₃) and the fifth point (P₅) is still high. However, the distance between P₃ and P₅ is less than the threshold value for the sampling distance and so the interval defined by these points is processed in a single non-trivial 'ShadeAndAccumulate' step.

Now, the algorithm can stop processing as the accumulated opacity along the ray is 1 (= fully opaque), and additional sample points would not have any impact on the result. Hence, the intervals [P₅, P₄] and [P₄, P₂] do not need to be processed further.

Altogether, exactly one non-trivial 'ShadeAndAccumulate' step has been performed, and the algorithm has effectively performed a binary search for the surface. Hence, the image quality is the same as for an iso-surface algorithm, and the computational complexity is also in the same order.

A more general example is shown in Figure 4, which illustrates a ray 400 cast through a voxel cell 401 comprising a transparent region 401 a, a semi-transparent region 40 1 b and an opaque region 401c. The opacity difference across a base interval defined by a first point P1 in the transparent region 401a and a second point P2 in the opaque region 401c exceeds the threshold, so that the original interval is divided into new regions defined by the first point P1 and a third point P3 in the opaque region 401 c, and the third point P3 and the second point P2.

The opacity difference between the third point P3 and the second point P2, both in the opaque region 401c is zero, and so this interval is processed in a single 'ShadeAndAccumulate' step.

The opacity difference between the third point P3 and the first point P exceeds the threshold, and so this interval is divided into two new regions defined respectively by the first point P1 and a fourth point P4 in the transparent region 401a, and the fourth point P4 and the third point P3.

The opacity difference between the first point P1 and the fourth point P4, both in the transparent region 401a is zero, and so this interval is processed a single 'ShadeAndAccumulate' step.

The opacity difference between the fourth point P4 and the third point P3 exceeds the threshold, and so this interval is divided into two new regions defined respectively by the fourth point P4 and a fifth point P5 in the semi- transparent region 401b, and the fifth point P5 and the third point P3.

Finally, the opacity difference between the fourth point P4 and the fifth point P5, and the opacity difference between the fifth point P5 and third point P3 are each less than the threshold so that the recursion stops. Both these intervals are separately processed with 'ShadeAndAccumulate' steps. Altogether, the sampling distance has adapted to the opacity changes along the ray.

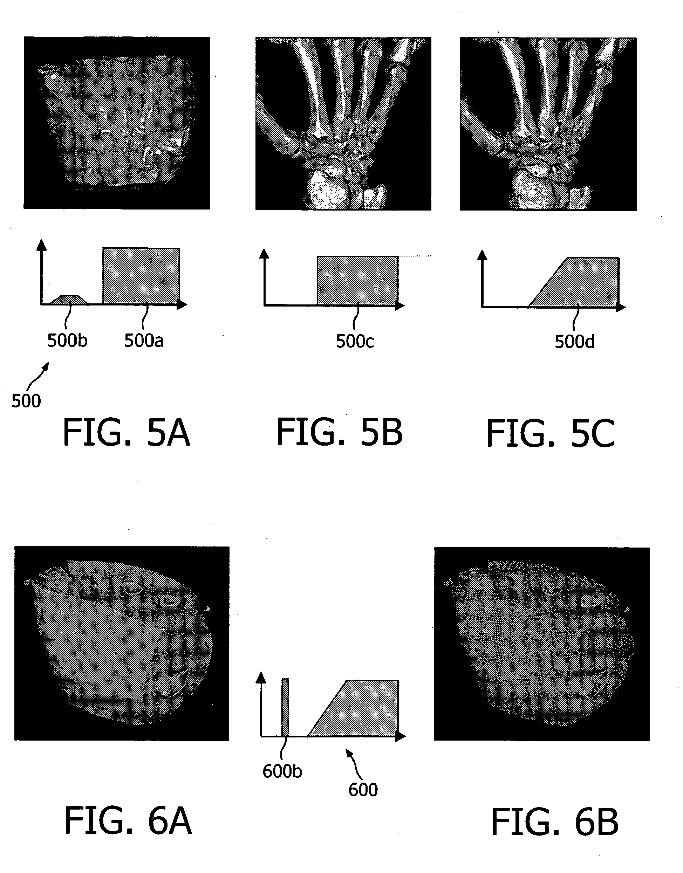

Methods embodying the present invention allow the generation of images that can neither be computed by iso-surface rendering nor by standard direct volume rendering. Examples are illustrated in Figures 5. In Figure 5A, a classification function 500 specifies an iso-surface 500a for the bones of a hand, together with a semi-transparent region 500b, for the skin of a hand. Semi-transparent regions can only be rendered by DVR-like algorithms. However, by employing an embodiment of the present invention, the bones of the hand are displayed at the same quality as obtained by an (iterative) iso-surface algorithm, which with a classical DVR algorithm is only possible at very high computational costs.

Figure 5B shows a step classification function 500c and a high-quality image of a hand, which may be produced either by an iso-surface algorithm or equivalently by an embodiment of the present invention, but not by standard DVR. Around the central finger of the hand, some noise particles are visible, as iso-surface rendering is typically sensitive to noise.

In Figure 5C, the step function 500d has been changed slightly to have a linear up-slope leading to a "smoothed" iso-surface. Embodiments of the present invention may be used to generate both the hand illustrated in Figure 5B and the hand illustrated in Figure 5C negating the previous need to switch from an iso-surface algorithm to generate the hand of Figure 5B to a standard DVR algorithm to generate the hand of Figure 5C.

Figures 6 show two images of a hand, one generated using an embodiment of the present invention Figure 6A, and the other generated using standard DVR Figure 6B, with a classification function 600 selected to demonstrate the different results generated by two approaches.

The segment 600a describes an arbitrarily small grey level interval related to a very thin opaque area at the skin of the hand phantom. Using an embodiment of the present invention, the skin in Figure 6A is visualized correctly and with the same visual appearance as a high-quality iso-surface.

Using a standard DVR algorithm it is a matter of chance whether a sample point is located inside the skin area or not, resulting in a fractured surface in Figure 6B. If pre-integration is used as taught in "K. Engel, M. Kraus, and T. Ertl, High-Quality Pre-Integrated Volume Rendering Using Hardware-Accelerated Pixel Shading, SIGGRAPH Workshop on Graphics Hardware, 2001" such fracturing can be avoided. However, the surface would still appear different to that shown in Figure 6a, as shading strongly depends on the notion of the exact surface location.

It will be appreciated that embodiments of the invention may be used in numerous other imaging modalities as well as medical applications, which require interactive 3D data visualization at high image quality for the structures-of-interest with different rendering modes.

Having thus described the present invention by reference to a preferred embodiment it is to be well understood that the embodiment in question is exemplary only and that modifications and variations such as will occur to those possessed of appropriate knowledge and skills may be made without departure from the scope of the invention as set forth in the appended claims and equivalents thereof. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements.

## Claims

1. A method for generating a 2-D image of a 3-D object represented by a volume data set comprising a multiplicity of data points each having an object parameter value, the method comprising: casting a plurality of notional rays (101, 200, 300, 400) through the 3-D object and for each ray, dividing a ray path into a plurality of base sampling intervals ([P0P1], [P1P2], [P1P3], [P3P2]) defined by data points (P1, P2, P3, P4) on the path and if it is determined that a difference in parameter values across a base sampling interval is greater than a pre-determined value, generating within the base sampling interval smaller sampling intervals between data points until it is determined that a difference in parameter values across each generated smaller sampling interval in the base interval is less than the pre-determined threshold and wherein values indicative of an interaction between the ray and the 3-D object in the sampling intervals along the path are accumulated to determine a pixel value in the 2-D image.

2. A method according to claim 1 wherein each smaller sampling interval is generated by dividing a larger sampling interval in two.

3. A method according to claim 1 wherein each smaller sampling interval is generated by dividing a larger sampling interval in half.

4. A method according to claim 1 wherein the parameter value is an opacity value.

5. A method according to claim 5 wherein a variation in parameter values in the data set is determined by an opacity or color function.

6. A method according to claim 1 wherein a value indicative of an interaction between the ray and the sample in a sampling interval is determined using a direct volume rendering procedure.

7. A method according to claim 6 wherein the interaction is determined using a shade and accumulate procedure.

8. A method according to claim 1, wherein smaller sampling intervals are only generated within a larger sampling interval if it is determined that the larger sampling interval has a length greater than a pre-determined threshold.

9. A device for generating a 2-D image of a 3-D object represented by a volume data set comprising a multiplicity of data points each having an object parameter value, the device comprising:
a scanner unit for casting a plurality of notional rays (101, 200, 300, 400) through the 3-D object,
a processing unit (100) for dividing each ray path into a plurality of base sampling intervals ([P0P1], [P1P2], [P1P3], [P3P2]) defined by data points (P1, P2, P3, P4) on the path and if it is determined that a difference in parameter values across a base sampling interval is greater than a pre-determined value, the processing unit further generates within the base sampling interval smaller sampling intervals between data points until it is determined that a difference in parameter values across each generated smaller sampling interval in the base interval is less than the pre-determined threshold and wherein values indicative of an interaction between the ray and the 3-D object in the sampling intervals along the path are accumulated to determine a pixel value in the 2-D image.

10. Computer apparatus comprising a processor means programmed to implement the method of claim 1.

## Patentansprüche

1. Verfahren zur Erzeugung eines 2-D-Bildes eines 3-D-Objekts, das durch einen Volumendatensatz mit einer Vielzahl von Datenpunkten dargestellt wird, die jeweils einen Objektparameterwert haben, wobei das Verfahren Folgendes umfasst: Aussenden einer Vielzahl von fiktiven Strahlengängen (101, 200, 300, 400) durch das 3-D-Objekt, und für jeden Strahlengang Aufteilen eines Strahlengangs in eine Vielzahl von durch Datenpunkte (P1, P2, P3, P4) auf dem Pfad definierte Basisabtastintervalle ([P0P1], [P1P2], [P1P3], [P3P2]), und wenn ermittelt wird, dass eine Differenz in Parameterwerten über ein Basisabtastintervall größer als ein vorgegebener Wert ist, Erzeugen von kleineren Abtastintervallen zwischen Datenpunkten innerhalb des Basisabtastintervalls, bis festgestellt wird, dass eine Differenz in Parameterwerten über jedes erzeugte kleinere Abtastintervall im Basisintervall kleiner als der vorgegebene Schwellenwert ist und wobei auf eine Interaktion zwischen dem Strahlengang und dem 3-D-Objekt in den Abtastintervallen auf dem Pfad hinweisende Werte kumuliert werden, um einen Pixelwert im 2-D-Bild festzulegen.

2. Verfahren nach Anspruch 1, wobei jedes kleinere Abtastintervall erzeugt wird, indem ein größeres Abtastintervall in zwei geteilt wird.

3. Verfahren nach Anspruch 1, wobei jedes kleinere Abtastintervall erzeugt wird, indem ein größeres Abtastintervall halbiert wird.

4. Verfahren nach Anspruch 1, wobei der Parameterwert ein Opazitätswert ist.

5. Verfahren nach Anspruch 5, wobei eine Variation in Parameterwerten im Datensatz durch eine Opazitäts- oder Farbfunktion bestimmt wird.

6. Verfahren nach Anspruch 1, wobei ein auf eine Interaktion zwischen dem Strahlengang und dem Abtastwert in einem Abtastintervall hinweisender Wert mit Hilfe einer direkten Volumenrendering-Prozedur bestimmt wird.

7. Verfahren nach Anspruch 6, wobei die Interaktion mit Hilfe einer Schattierungs- und Kumulierungsprozedur bestimmt wird.

8. Verfahren nach Anspruch 1, wobei kleinere Abtastintervalle nur innerhalb eines größeren Abtastintervalls erzeugt werden, wenn festgestellt wird, dass die Länge des größeren Abtastintervalls größer als ein vorgegebener Schwellenwert ist.

9. Vorrichtung zur Erzeugung eines 2-D-Bildes eines 3-D-Objekts, das durch einen Volumendatensatz mit einer Vielzahl von Datenpunkten dargestellt wird, wobei jeder Datenpunkt einen Objektparameterwert hat, wobei die Vorrichtung Folgendes umfasst:
eine Scanner-Einheit zum Aussenden einer Vielzahl von fiktiven Strahlengängen (101, 200, 300, 400) durch das 3-D-Objekt,
eine Verarbeitungseinheit (100) zum Aufteilen jedes Strahlengangs in eine Vielzahl von durch Datenpunkte (P1, P2, P3, P4) auf dem Pfad definierte Basisabtastintervalle ([P0P1], [P1P2], [P1P3], [P3P2]), und wenn ermittelt wird, dass eine Differenz in Parameterwerten über ein Basisabtastintervall größer als ein vorgegebener Wert ist, erzeugt die Verarbeitungseinheit außerdem innerhalb des Basisabtastintervalls kleinere Abtastintervallen zwischen Datenpunkten, bis festgestellt wird, dass eine Differenz in Parameterwerten über jedes erzeugte kleinere Abtastintervall im Basisintervall kleiner als der vorgegebene Schwellenwert ist und wobei auf eine Interaktion zwischen dem Strahlengang und dem 3-D-Objekt in den Abtastintervallen auf dem Pfad hinweisende Werte kumuliert werden, um einen Pixelwert im 2-D-Bild festzulegen.

10. Computergerät mit einem Prozessormittel, das zur Implementierung des Verfahrens nach Anspruch 1 programmiert ist.

## Revendications

1. Procédé de création d'une image en 2D d'un objet en 3D représenté par un jeu de données de volume comprenant une multiplicité de points de données ayant chacun une valeur de paramètre d'objet, le procédé comprenant les étapes consistant à : diffuser une pluralité de rayons notionnels (101, 200, 300, 400) à travers l'objet en 3D et pour chaque rayon, diviser un chemin de rayon en une pluralité d'intervalles d'échantillonnage de base ([P0P1], [P1P2], [P1P3], [P3P2]) définis par des points de données (P1, P2, P3, P4) sur le chemin et s'il est déterminé qu'une différence de valeurs de paramètre à travers un intervalle d'échantillonnage de base est supérieure à une valeur prédéterminée, créer à l'intérieur de l'intervalle d'échantillonnage de base des intervalles d'échantillonnage plus petits entre des points de données jusqu'à ce qu'il soit déterminé qu'une différence de valeurs de paramètre à travers chaque intervalle d'échantillonnage plus petit créé dans l'intervalle de base est inférieure au seuil prédéterminé et dans lequel des valeurs indicatives d'une interaction entre le rayon et l'objet en 3D dans les intervalles d'échantillonnage le long du chemin sont accumulées pour déterminer une valeur de pixel dans l'image en 2D.

2. Procédé selon la revendication 1, dans lequel chaque intervalle d'échantillonnage plus petit est créé en divisant un intervalle d'échantillonnage plus grand en deux.

3. Procédé selon la revendication 1, dans lequel chaque intervalle d'échantillonnage plus petit est créé en divisant un intervalle d'échantillonnage plus grand de moitié.

4. Procédé selon la revendication 1, dans lequel la valeur de paramètre est une valeur d'opacité.

5. Procédé selon la revendication 5, dans lequel une variation de valeurs de paramètre dans le jeu de données est déterminée par une fonction d'opacité ou de couleur.

6. Procédé selon la revendication 1, dans lequel une valeur indicative d'une interaction entre le rayon et l'échantillon dans un intervalle d'échantillonnage est déterminée en utilisant une procédure de rendu de volume direct.

7. Procédé selon la revendication 6, dans lequel l'interaction est déterminée en utilisant une procédure de dégradé et d'accumulation.

8. Procédé selon la revendication 1, dans lequel les intervalles d'échantillonnage plus petits sont uniquement créés à l'intérieur d'un intervalle d'échantillonnage plus grand s'il est déterminé que l'intervalle d'échantillonnage plus grand a une longueur supérieure à un seuil prédéterminé.

9. Dispositif de création d'une image en 2D d'un objet en 3D représenté par un jeu de données de volume comprenant une multiplicité de points de données ayant chacun une valeur de paramètre d'objet, le dispositif comprenant :
une unité de scanner pour diffuser une pluralité de rayons notionnels (101, 200, 300, 400) à travers l'objet en 3D,
une unité de traitement (100) pour diviser chaque chemin de rayon en une pluralité d'intervalles d'échantillonnage de base ([P0P1], [P1P2], [P1P3], [P3P2]) définis par des points de données (P1, P2, P3, P4) sur le chemin et s'il est déterminé qu'une différence de valeurs de paramètre à travers un intervalle d'échantillonnage de base est supérieure à une valeur prédéterminée, l'unité de traitement crée en outre à l'intérieur de l'intervalle d'échantillonnage de base des intervalles d'échantillonnage plus petits entre des points de données jusqu'à ce qu'il soit déterminé qu'une différence de valeurs de paramètre à travers chaque intervalle d'échantillonnage plus petit créé dans l'intervalle de base est inférieure au seuil prédéterminé et dans lequel des valeurs indicatives d'une interaction entre le rayon et l'objet en 3D dans les intervalles d'échantillonnage le long du chemin sont accumulées pour déterminer une valeur de pixel dans l'image en 2D.

10. Appareil informatique comprenant un moyen de processeur programmé pour mettre en oeuvre le procédé de la revendication 1.
